(19) Europäisches Patentamt / European Patent Office / Office européen des brevets

(11) **EP 2 209 220 A1**

(12) **EUROPEAN PATENT APPLICATION**

(43) Date of publication:
**21.07.2010 Bulletin 2010/29**

(51) Int Cl.:
***H04B 7/04*** (2006.01)

(21) Application number: **09368002.3**

(22) Date of filing: **19.01.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventors:<br>• **Sesia, Stefania**<br>  **06000 Nice (FR)**<br>• **Slock, Dirk**<br>  **06220 Vallauris (FR)**<br>• **Wagner, Sebastian**<br>  **06600 Antibes (FR)** |
| (71) Applicant: **ST-Ericsson (France) SAS**<br>**38000 Grenoble (FR)** | (74) Representative: **Schuffenecker, Thierry**<br>**120 Chemin de la Maure**<br>**06800 Cagnes sur Mer (FR)** |

(54) **Process for beamforming data to be transmitted by a base station in a MU-MIMO system and apparatus for performing the same**

(57)   A process for beamforming data to be transmitted in a MU-MIMO communication system comprising a base station and a selected set of User Equipments (UE) communicating with said base station; said data being precoded by said base station in accordance with a beamforming matrix complying with a precoding matrix under the form of :

$$V_{CU} = \frac{1}{\sqrt{M}} DPA$$

Where
- M is the number of transmit antennas
- D is a diagonal unitary matrix of the form D = diag (1, exp(j$\varphi_1$), exp(j$\varphi_2$), ... exp(j$\varphi_{M-1}$)),
- P is a permutation matrix interchanging only the last M-1 rows.
- A is a general Hadamard matrix.

and that the signaling information transmitted by the base station to the UE comprises at least a first and a second index which are representative of D, P and A.

Fig. 2

**Description**

**Technical field**

The present invention relates to digital wireless communications and more particularly to a process for beamforming data to be transmitted by a base station in a MU-MIMO communication system, and apparatus for performing the same.

**Background Art**

Multiple-Input Multiple-Output (MIMO) systems have the potential to significantly increase the peak throughput. Although peak data rates are often a compelling marketing argument for emerging wireless standards, most of the network operators are interested in increasing their cell throughput or to distribute rates more uniformly within a cell. Instead of focusing on a single user (SU-MIMO) the base-station employs its antennas to communicate to multiple non-cooperative users (MU-MIMO) on the same time-frequency resource. In order to reduce the interference caused by the imperfect spatial separation of the users the base station can encode the signal prior to the transmission. This precoding (or beamforming) scheme and consequently the sum-rate is highly dependent on the channel state information available at the transmitter (CSIT). The capacity is achieved by using a technique called *Dirty Paper Coding,* DPC, which is acknowledged to be fairly complex for a practical implementation in a commercial product. Linear precoding techniques such as Zero-Forcing Beamforming (ZFBF), regularized ZFBF (R-ZFBF) or Unitary Beamforming (UBF) can achieve a large portion of the MIMO broadcast channel capacity. Of particular interest in practical systems such as LTE or WiMAX is the case where the entries of the UBF matrix are further constrained to have the same constant modulus (CUBF) i.e. all entries have the same magnitude. The reasons are

-    a reduced complexity in the implementation
-    balanced transmit powers on the physical antennas which enables the RF-amplifiers to operate more efficiently.

In case of UBF balanced transmit powers are achieved only if the user signals have the same average power. This is in contrast to the CUBF where balanced transmit powers conditions can be achieved also if the power for each user is adapted.

CUBF is the current assumption in the LTE standardization, and it is very likely to be the assumption used for the next generation mobile system LTE-A. So far the standard defines a set of precoding matrices. The eNodeB has to choose the best precoding matrix in this available set which maximizes the sum-rate in the cell. The performance obtained with this scheme is highly suboptimal, because the set of available precoding matrices is too small and it can not be well adapted to the short term average characteristic of the MIMO broadcast channel.

There are several different ways to construct a CUBF (Householder transformation, DFT, Walsh Hadamard) but an optimization needs to be done in order to improve the performance. So far the standard defines a set of precoding matrices shared between the eNodeB and the UEs. The eNodeB has to choose the best precoding matrix in this available set which maximizes the sum-rate in the cell. The UE tests all possible precoding matrices in the defined set, selects the best precoding matrix and feeds back the preferred precoding index. The eNodeB will schedule only a set of UEs which have fed back the same precoding index, which limits the choice of the best users that the eNodeB can select. The performance obtained with this scheme is highly suboptimal, because the set of available precoding matrices is too small and it can not be well adapted to the short term average characteristic of the MIMO broadcast channel. This method is in conclusion not suitable because it does not fully exploit the benefit of a multi-user environment/diversity and does not exploit all the possible degrees of freedom available in the system.

The present invention aims to improve the situation .

**Summary of the invention**

It is an object of the present invention to provide an optimal, complete and generic construction of a unitary beamformer under the constant modulus constraint.

It is a further object of the present invention to provide an optimal structure for a constant modulus unitary beamforming (current assumption in LTE standard) which could be used in LTE standard Rel 9/ LTE-Advanced standard.

It is a further object of the present invention to provide an efficient/optimal precoding of the signal transmitted by a eNodeB (base station in LTE) to several UEs when the former employs multiple antennae.

It is still another object of the present invention to improve the performance of the multi-user MIMO (Multiple Input Multiple Output) strategy currently standardized for Rel 8 LTE standard.

These and other objects are achieved by means of a process for beamforming data to be transmitted by a base station to a set of User Equipments (UE) in a MIMO communication system. A linear precoding of the data is applied by the base station (eNodeB) using a beamforming matrix of the form :

$$V_{CU} = \frac{1}{\sqrt{M}} DPA$$

Where

- M is the number of transmit antennas

- D is a diagonal unitary matrix of the form D = diag (1, exp(j$\varphi_1$), exp(j$\varphi_2$), ... exp(j$\varphi_{M-1}$)),

- P is a permutation matrix interchanging only the last M-1 rows.

- A is a general Hadamard matrix.

The signaling between the base station and the User Equipments (UE) is based on the transmission of at least a first and a second index which are representative of matrices D, P and A.
In one embodiment, there are four antennas (M=4) and the Hadamard matrix complies with the general formula

$$\mathbf{A} = \begin{bmatrix} 1 & 1 & 1 & 1 \\ 1 & 1 & -1 & -1 \\ 1 & -1 & e^{j\theta} & -e^{j\theta} \\ 1 & -1 & -e^{j\theta} & e^{j\theta} \end{bmatrix}$$

with $\theta$ being included into a Quantized Vector [$\varphi_1$, $\varphi_2$ ,...., $\varphi_{M-1}$,$\theta$] used for generating the aforementioned first index which is representative of both D and A.
In one particular embodiment, the base station executes an iterative optimization algorithm based on a cost function for the purpose of deriving the quantized vector f=[$\varphi_1$,$\varphi_2$,....,$\varphi_{M-1}$,$\theta$] as well as permutation matrix P.
Preferably, the cost function is based on the sum of rates.
The invention also provides a process which is executed by an eNodeB in a MU-MIMO communication system.
The process comprises the following steps:

- receiving and collecting the channel estimation provided by the multiple User Equipments;
- selecting one cost function to be optimized
- computing a precoding matrix ($V_{cu}$) complying with the formula:

$$V_{CU} = \frac{1}{\sqrt{M}} DPA$$

Where

- M is the number of transmit antennas

- D is a diagonal unitary matrix of the form D = diag (1, exp(j$\varphi_1$), exp(j$\varphi_2$), ... exp(j$\varphi_{M-1}$)),

- P is a permutation matrix interchanging only the last M-1 rows.

- A is a general Hadamard matrix.

- executing an optimization algorithm of said selected cost function in order to compute the optimized representation D, P and A of said precoding matrix $V_{cu}$
- quantizing the result of said optimisation algorithm in order to return a quantized vector;
- generating at least a first and a second index representative of said quantized vector and said permutation matrix;
- transmitting said at least first and second indexes to said UE s;
- computing said precoding matrix $V_{CU}$ and using it for coding the transmit data.

The invention also provides a process to be used in a User Equipment which comprises the steps of:

- estimating the channel characteristics;
- transmitting to said base station the estimated channel,
- receiving from said base station at least a first and a second index representative of the beamforming precoding utilized by the base station for beamforming the transmitted data;
- using said indexes for generating:

    - a first diagonal unitary matrix of the form D = diag $(1, \exp(j\varphi_1), \exp(j\varphi_2), ... \exp(j\varphi_{M-1}))$,
    - a second permutation matrix P interchanging only the last M-1 rows;
    - a third Hadamard matrix A;

- computing a precoding matrix ($V_{cu}$) in accordance with the formula:

$$V_{CU} = \frac{1}{\sqrt{M}} DPA$$

where M is the number of transmit antennas
- applying said precoding matrix for processing the precoded received data.

At last, the invention provides a User Equipment for executing the above mentioned process.

## Description of the drawings

Other features of one or more embodiments of the invention will best be understood by reference to the following detailed description when read in conjunction with the accompanying drawings.

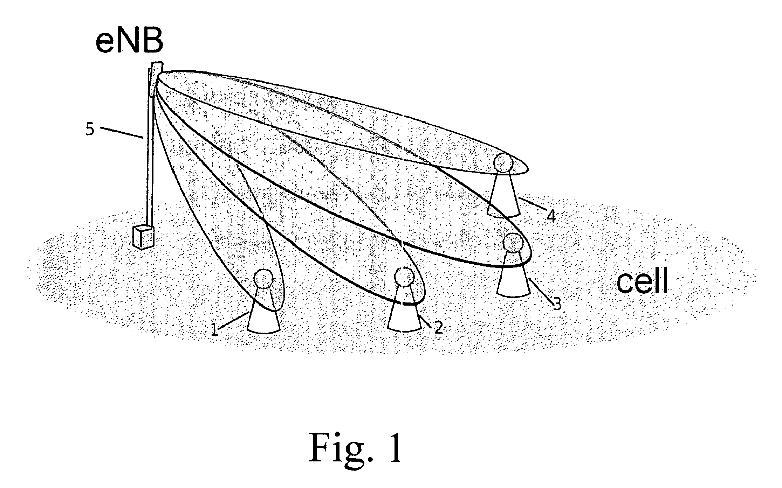

Figure 1 recalls the general architecture of a MU-MIMO communication between a base station or a eNodeB and a set of four User Equipments (UE).

Figure 2 illustrates the process executed by the base station in accordance with the present invention.

Figure 3 illustrates a process executed by a UE in accordance with the present invention.

Figures 4 and 5 illustrates results obtained with the process.

Figure 6 illustrates one possible general algorithm to compute angles and permutations

Figure 7 shows one example of a General algorithm to compute angles and permutations with sum-rate as cost function

## Description of the preferred embodiment

### A. Preliminary notation and system model

In the following boldface iower-case and uppercase characters denote vectors and matrices, respectively. The operators (.)T, (.)H and tr(.) denote transpose, conjugate transpose and trace of a matrix, respectively. The expectation is E[-] and diag(x) is a diagonal matrix with vector x on the main diagonal. The N x N identity matrix is $I_N$.

There is assumed a scenario where one transmitter with M antennas communicates to K single-antenna receivers. Furthermore it is supposed that there are always K = M users selected for transmission. A beamforming vector $v_k$ is assigned to each of the K users, where we define the beamforming matrix as

$$\text{Vcu} = [v1 \ ... \ vk] \in \mathbb{C}^{M \times K}$$

The transmit signal is formed as :

$$\mathbf{x} = \sum_{k=1}^{M} \sqrt{p_k}\mathbf{v}_k s_k$$

where $p_k$ and $s_k$ are the power and the information symbol of user k, respectively.

The instantaneous sum-rate of the users is given by the following formulas

$$\mathcal{R} = \sum_{k=1}^{M} \log_2\left(1 + \gamma_k\right)$$

with

$$\gamma_k = \frac{\|\mathbf{h}_k\|^2 \rho_k^2}{\|\mathbf{h}_k\|^2(1 - \rho_k^2) + \frac{\sigma_n^2}{p_k}}$$

with $\rho_k^2 = \left|\bar{\mathbf{h}}_k^{\mathsf{H}}\mathbf{v}_k\right|^2$, $\bar{\mathbf{h}}_k = \frac{\mathbf{h}_k}{\|\mathbf{h}_k\|}$. Here, $\rho_k^2$ is the *alignment* of a users' beamforming vector with its channel direction.

## B. Embodiments

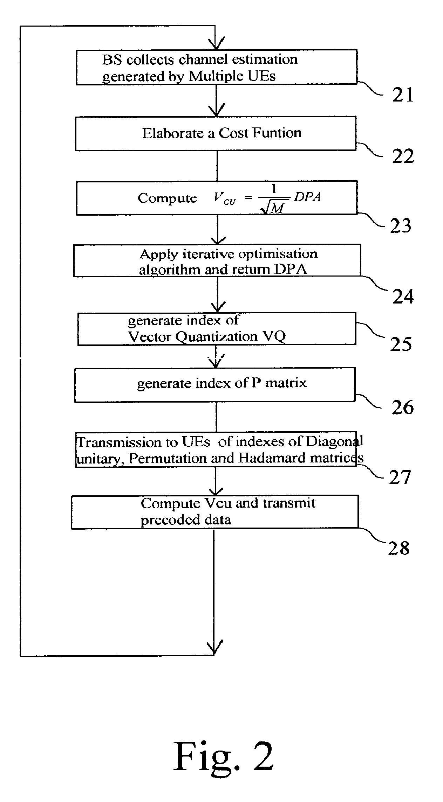

With respect to figure 2, there will now be described the process executed by a base station or eNodeB operated in a MU-MIMO mode. It should be noticed that the process which will be described below is periodical and is constantly executed for the purpose of continuously adapting the precoding parameters to the real communications characteristics.

It is assumed that a set of User Equipments (UE) and a base station are synchronized, configured in the same mode (Multiple User MIMO mode) and that a preselected set of UEs are being scheduled for transmission. The synchronization of the UEs with the eNodeB is not part of the present invention and is well known to the skilled man.

In a step 21, the base station or eNodeB receives and gathers the channel estimation which is provided by the multiples User Equipments.

In a step 22, the base station selects and elaborates one particular cost function which needs to be optimized in the system. In that respect, it should be noticed that many possibilities of cost functions may be considered - based on the maximization or the minimization of a given criterion - in accordance with the particular requirements of the product manufacturer.

One particular and non limiting example shall be considered below, for the purpose of illustrating the principle of the method invented, based on the maximization of the sum of the rates of the MU MIMO communication.

In a step 23, the eNodeB computes a precoding matrix ($V_{cu}$) which complies to the representation below and which maximises the selected cost function:

$$V_{CU} = \frac{1}{\sqrt{M}} DPA$$

Where

- M is the number of transmit antennas
- D is a diagonal unitary matrix of the form D = diag (1, exp($j\varphi_1$), exp($j\varphi_2$), ... exp($j\varphi_{M-1}$)), the set of $\varphi_1, ...\varphi_{(M-1)}$} being unknown variables which will be computed by the eNodeB.
- P is a permutation matrix interchanging only the last M-1 rows.

Basically, there are (M-1)! possible matrices with MxM dimensions, having one a first row equal to [1, 0, ... 0], a first column equal to $[1, 0, ... 0]^T$ and the other rows and columns only containing only 1 element equal to 1.

- A is a general Hadamard matrix. Hadamard matrices are known to the skilled man.

In particular, it is known that for M<=5 and M!=4, there exists only one unique Hadamard matrix which takes the form of the Discrete Fourier Transform (DFT) matrix, which takes the following form:

$$\mathbf{A}_M(m, n) = e^{-j \frac{2\pi}{M} (m-1)(n-1)} \; ; \; m, n = 1, 2, \ldots, M$$

For M = 4, the matrix takes the form below with $\theta$ being one free parameter:

$$\mathbf{A}_4^{(1)}(\theta) = \begin{bmatrix} 1 & 1 & 1 & 1 \\ 1 & 1 & -1 & -1 \\ 1 & -1 & e^{j\theta} & -e^{j\theta} \\ 1 & -1 & -e^{j\theta} & e^{j\theta} \end{bmatrix}$$

For M>5 there are numerous different possibilities for the general Hadamard matrix A.

The process then proceeds with a step 24 where the eNodeB initiates an optimisation algorithm of the selected cost function in order to compute the DPA representation of the precoding matrix $V_{cu}$

Clearly, any type of iterative optimisation algorithm can be considered for the purpose of optimising the considered cost function.

There is now provided, the illustration's sake, an example of the optimization algorithm mentioned above, in order to find the optimal values of the unknown variables in D, the permutation matrix P and in the case of M=4 the optimal value of theta. The example is provided for a general cost function, and particularized for the case when the cost function is the sum of the rates of the set of selected users.

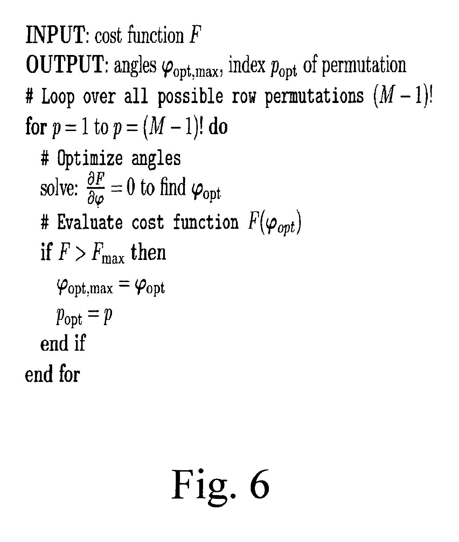

Figure 6 shows a possible general algorithm to compute angles and permutations

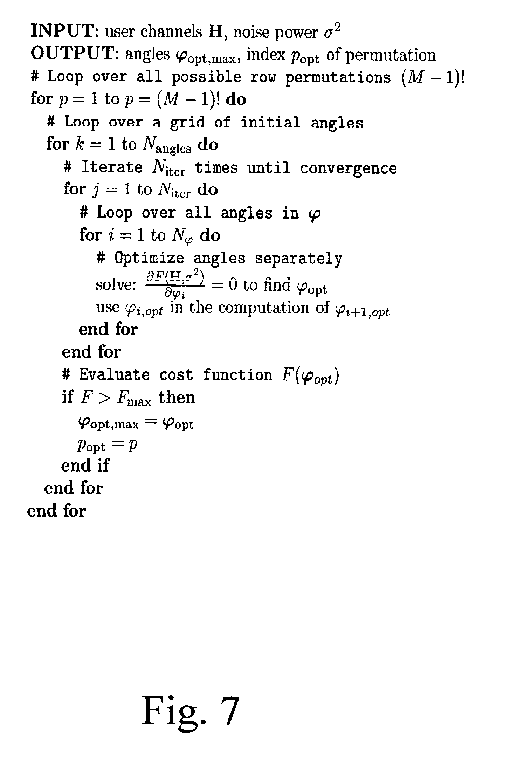

Figure 7 shows one example of a General algorithm to compute angles and permutations with sum-rate as cost function

At the completion of the iterative optimisation algorithm, the process then returns the parameters representative of the components D, P, A of the precoding matrix $V_{cu}$. In the particular case of M=4 , it can be seen that the solution of the optimisation process of the cost function will return the following representation (D, P, A) of the preceding matrix $V_{cu}$ based on a particular vector [$\varphi_1$,$\varphi_2$,....,$\varphi_{M-1}$], a permutation matrix, and in the case M=4, a value $\theta$

The process then proceeds with a step 25 where the vector representative of vector D - namely vector [$\varphi_1$,$\varphi_2$, $\varphi_{M-1}$] - is quantized in order to return a Quantized Vector. Generally speaking, the concept of quantization is well known to a skilled man and does not need to be further elaborated. Any vector quantization technique such as generalized Lloyd Max, Random Vector Quantization, Uniform Quantization may be used and, as known by the skilled man, introduces an error whose variance depends on the number of bits used to quantize. Clearly, the performance closely depends on the amount of bits which are considered in the quantizing process.

The quantization process results in the approximation of the vector by the best representation of the above vector [$\varphi_1$, $\varphi_2$, ...., $\varphi_{M-1}$] into a so-called codebook - a-priori known between the eNodeB and the UE - and which contains a predetermined set of vectors which can be used for the precoding process.

The quantization step returns an index into the above mentioned codebook.

It should be noticed that, in the particular case of M=4 (four users MIMO), the Vector Quantization encompasses the value of $\theta$ being representative of the A matrix and takes the following form:

$$[\varphi_1, \varphi_2, ...., \varphi_{M-1}, \theta]$$

Then, in a step 26, the process proceeds with the generation of an index representative of the permutation matrix being determined in step 24 above. In one embodiment, this is simply achieved by means of a look-up table containing (M-1)! entries and which associates one permutation matrix to one index.

Then, in a step 27, the eNodeB transmits to all the User Equipments (UE) the indexes generated previously and respectively representing the D diagonal unitary matrix, the P permutation matrix and the A Hadamard matrix representative of the precoding process which is applied on the transmitted data.

It can therefore be seen that in the particular example of M=4 , the eNodeB transmits two indexes to the UEs:

- a first index representing a quantized version of the vector [$\varphi_1$,$\varphi_2$,....$\varphi_{M-1}$,$\theta$]
- a second index representing the permutation matrix.

In a step 28, the eNodeB then computes the precoding vector $V_{CU}$ to be applied for the transmission of data to the UEs.

In one embodiment the eNodeB computes matrix $V_{CU}$ from matrix P, D, A by using the accurate values which were returned process step 24.

Alternatively, the eNodeB computes matrices P, D, A by using the results in step 25, that is to say after the quantization process.

The advantage of the first embodiment is that the interference is minimized, while the alternate embodiment provides a better matching between the eNodeB and the UEs.

The process then loops back to step 21 where a new set of channel estimation feedback information is being processed by means of steps 21-28.

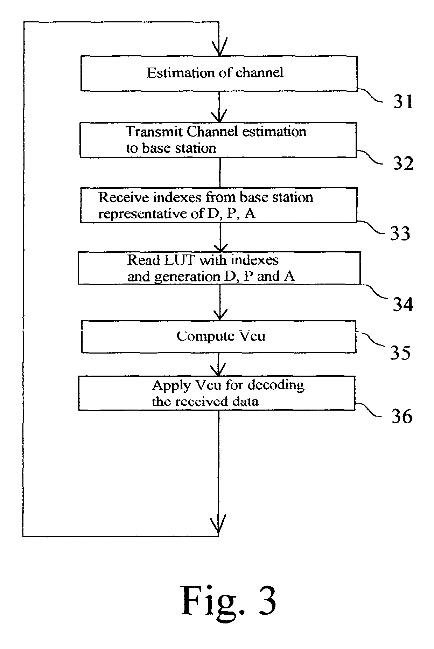

With respect to figure 3, there will now be described the process which is executed in the User Equipment.

The process starts with a step 31 which is the estimation of the channel exploiting for example known reference signals or pilots, in order to compute an approximation of that estimation. Several techniques are known in the art and, for the sake of conciseness, will not be further elaborated.

The process then proceeds with a step 32 wherein the UE transmits to the base station an approximation of the estimated channel, for instance under the form of a Quantized Vector.

The process then proceeds to a step 33 where the UE receives the two indexes (at least) transmitted by the eNodeB during step 27 described above.

The UE comprises an internal memory for the storage of the same codebook which is shared with the eNodeB. This can be achieved by, for instance, a look-up table (LUT) for storing the Quantized Vector used for the representation D (and A in the case M=4). With respect to the permutation matrix, in one embodiment, the UE and the eNodeB share an order to permute the matrix starting from the identity matrix, so that an index k $\in$ (1, (M-1)!) univoquely represents one permutation matrix. This operation can be considered without errors and therefore, the second index uniquely identifies the proper permutation matrix to use. Alternatively, a second look-up table can be used for directly returning the permutation matrix from the knowledge of the second index.

Therefore, by accessing its internal look-up tables in <u>a step 34</u>, the UE can thus read the Quantized Vector [$\varphi_1,\varphi_2,....,\varphi_{M-1},\theta$] (for M = 4) representative of D and A matrices, as well as the permutation matrix P to use.

The UE can then, in <u>a step 35</u>, compute the precoding matrix ($V_{cu}$) in accordance with the formula below:

$$V_{CU} = \frac{1}{\sqrt{M}} DPA$$

Such, precoding can then be applied in <u>a step 36</u> by the receiver of the UE in order to reduce interference of the MU MIMO communication.

The process then loops back to step 31.

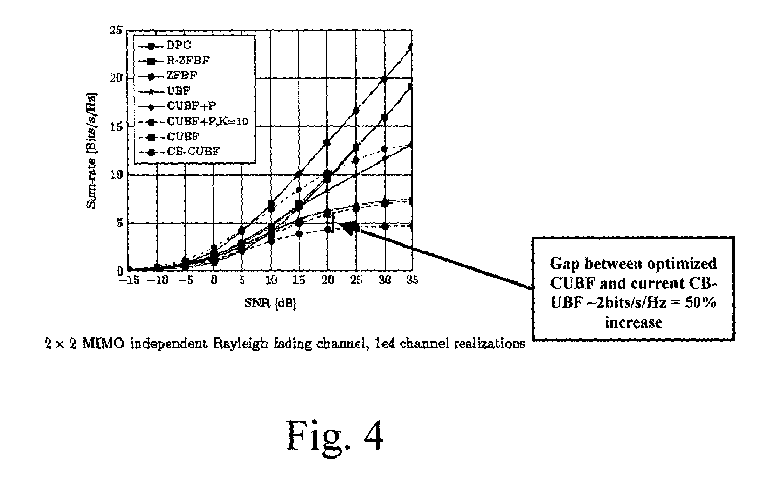

Figure 4 illustrates the results for 2x2 MIMO system. It compares the sum rate obtained with DPC, ZF techniques (ZFBF and R-ZFBF) and a set of unitary beamforming techniques. As expected UBF is shown to achieve higher performance than costrained UBF schemes (due to the additional degrees of freedom available in the optimization). The figure clearly show that CUBF (constant modulus scheme) show higher performance w.r.t the current solution used in the standard. In the SNR region of interest, the generic structure of the constant modulus optimized unitary beamformer (see figure with label CUBF and CUBF + P = CUBF with power optimization) is shown to provide significant gain ranging from 1 bit/s/Hz at 5dB (CB-UBF sum rate is 2bits/s/Hz) to 2-2.5bits/s/Hz at after SNR of 15dB. **The relative increase in sum rate is 50% for SNR>5dB.**

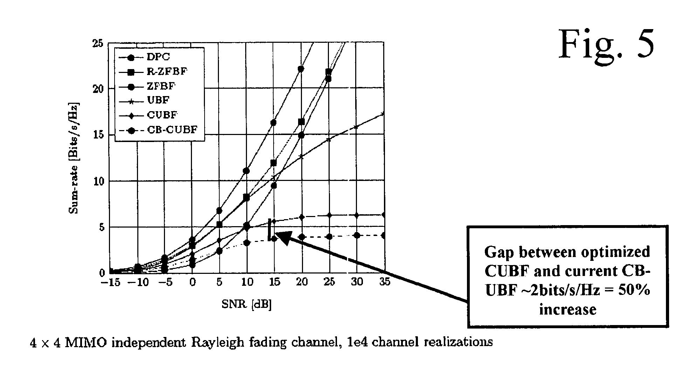

Figure 5 shows the same results for 4x4-MIMO system (see label CUBF).

The gain is ~50%. The results improve if power optimization is included.

The invention can be applied to point-to-point MIMO transmission (SU-MIMO) as well as to multi-user MIMO scenarios. In case of SU-MIMO the beamformer is used to adapt the transmitted signal to the channel in order to facilitate the detection at the receiver or to enhance the link reliability (QoS). In the MU-MIMO transmission the beamformer is used to decrease the interference between users in the cell.

**Claims**

1. Process for beamforming data to be transmitted MU-MIMO communication system comprising a base station and a selected set of User Equipments (UE) communicating with said base station; said data being precoded by said base station in accordance with a beamforming matrix complying with a precoding matrix under the form of :

$$V_{CU} = \frac{1}{\sqrt{M}} DPA$$

Where

- M is the number of transmit antennas
- D is a diagonal unitary matrix of the form D = diag (1, exp(j$\varphi_1$), exp(j$\varphi_2$), ... exp(j$\varphi_{M-1}$)),
- P is a permutation matrix interchanging only the last M-1 rows.
- A is a general Hadamard matrix.
and that the signaling information transmitted by the base station to the UE comprises at least a first and a second index which are representative of D, P and A.

2. Process according to claim 1 wherein M=4 and that said Hadamard matrix complies with the general formula

$$A = \begin{bmatrix} 1 & 1 & 1 & 1 \\ 1 & 1 & -1 & -1 \\ 1 & -1 & e^{j\theta} & -e^{j\theta} \\ 1 & -1 & -e^{j\theta} & e^{j\theta} \end{bmatrix}$$

with $\theta$ being included into a Quantized Vector $[\varphi_1, \varphi_2, ....., \varphi_{M-1}, \theta]$ used for generating said first index which is representative of both D and A.

3. Process according to claim 2 **characterized in that** said base station computes said quantized vector $[\varphi_1, \varphi_2, ...., \varphi_{M-1}, \theta]$ and said permutation vector by means of an iterative optimization algorithm based on a cost function.

4. Process according to claim 3 **characterized in that** said cost function is based on the sum of the rates.

5. Process according to anyone of claim 1 to 4 **characterized in that** said communication is a multiple user MIMO communications between a eNodeB and four User Equipments.

6. Process for processing the data to be transmitted to User Equipments (UE) in a MU-MIMO communication, said received data being precoded by a Constant Unitary Beamforming process for suppressing interference, said process involving the steps of:

- receiving and collecting (21) the channel estimation provided by the multiple User Equipments;
- select (22) one cost function to be optimized
- computing (23) a precoding matrix ($V_{cu}$) complying with the formula:

$$V_{CU} = \frac{1}{\sqrt{M}} DPA$$

Where

- M is the number of transmit antennas
- D is a diagonal unitary matrix of the form D = diag $(1, \exp(j\varphi_1), \exp(j\varphi_2), ... \exp(j\varphi_{M-1}))$,
- P is a permutation matrix interchanging only the last M-1 rows.
- A is a general Hadamard matrix.

- executing (24) an optimization algorithm of said selected cost function in order to compute the optimized representation D, P and A of said precoding matrix $V_{cu}$
- quantizing (25) the result of said optimisation algorithm in order to return a quantized Vector;
- generating at least a first and a second index representative of said quantized vector and said permutation matrices;
- transmitting (27) said at least first and second indexes to said UEs;
- computing said precoding vector and $V_{CU}$ and using it for coding the transmitted data to the UE.

7. Process according to claim 6 **characterized in that** said beamforming precoding of the transmitted data is based on the actual result of said optimisation algorithm.

8. Process according to claim 6 **characterized in that** said beamforming precoding of the transmitted data is based on the quantized vector derived from step (25).

9. Process according to claim 6 **characterized in that** M=4 and that said Hadamard matrix complies with the general formula

$$A = \begin{bmatrix} 1 & 1 & 1 & 1 \\ 1 & 1 & -1 & -1 \\ 1 & -1 & e^{j\theta} & -e^{j\theta} \\ 1 & -1 & -e^{j\theta} & e^{j\theta} \end{bmatrix}$$

with $\theta$ being included into a Quantized Vector $[\varphi_1, \varphi_2, ...., \varphi_{M-1}, \theta]$ used for generating said first index.

**10.** Process executed by a User Equipment for processing data being precoded by a base station in accordance with a with a beamforming matrix in a MU-MIMO communication system, said process comprising the steps of:

- estimating (31) the channel characteristics;
- transmitting (32) to said base station the estimated channel,
**characterized in that** it further proceeds with the steps of:

- receiving from said base station at least a first and a second index representative of the beamforming precoding utilized by the base station for beamforming the transmitted data;
- using (34) said indexes for generating:

- a first diagonal unitary matrix of the form D = diag (1, exp($j\varphi_1$), exp($j\varphi_2$), ... exp($j\varphi_{M-1}$)),
- a second permutation matrix P interchanging only the last M-1 rows;
- a third Hadamard matrix A;

- computing (35) a precoding matrix ($V_{cu}$) in accordance with the formula:

$$V_{CU} = \frac{1}{\sqrt{M}} DPA$$

where M is the number of transmit antennas

- D is a diagonal unitary matrix of the form D = diag (1, exp($j\varphi_1$), exp($\varphi_2$), ... exp($j\varphi_{M-1}$)),
- P is a permutation matrix interchanging only the last M-1 rows.
- A is a general Hadamard matrix.
and that the signaling information transmitted by the base station to the UE comprises at least a first and a second index which are representative of D, P and A.

- applying said precoding matrix for processing the precoded received data.

**11.** Process according to claim 10 wherein M=4 and that said Hadamard matrix complies with the general formula

$$A = \begin{bmatrix} 1 & 1 & 1 & 1 \\ 1 & 1 & -1 & -1 \\ 1 & -1 & e^{j\theta} & -e^{j\theta} \\ 1 & -1 & -e^{j\theta} & e^{j\theta} \end{bmatrix}$$

and that said first index is used for accessing a look-up table returning a quantized vector having the form:

$$[\varphi_1,\varphi_2,\ldots,\varphi_{M-1},\theta]$$

where $[\varphi_1,\varphi_2,\ldots,\varphi_{M-1}]$ is used for generating said first diagonal unitary matrix and $\theta$ is used for generating said Hadamard matrix in the case M=4.

12. Process according to claim 10 **characterized in that** said communication is a Multiple User MIMO communication.

13. Telecommunication device comprising means for performing any process defined in claims 1 to 12.

14. User Equipment for for processing data being precoded by a base station in accordance with a with a beamforming matrix in a MU-MIMO communication system,
said UE comprising:

- means for estimating the channel characteristics;
- means for transmitting to said base station the estimated channel,
**characterized in that** it further includes:

- means for receiving from said base station at least a first and a second index representative of the beamforming precoding utilized by the base station for beamforming the transmitted data;
- a look-up table for reading a quantized vector in response to said indexes;
- means for computing, from said quantized vector,

- a first diagonal unitary matrix of the form D = diag (1, exp(j$\varphi_1$), exp(j$\varphi_2$), ... exp(j$\varphi_{M-1}$)),
- a second permutation matrix P interchanging only the last M-1 rows;
- a third Hadamard matrix A;

- means for computing a precoding matrix ($V_{cu}$) in accordance with the formula:

$$V_{CU} = \frac{1}{\sqrt{M}} DPA$$

where M is the number of transmit antennas

- means for applying said precoding matrix for processing the precoded received data.

15. UE according to claim 14 **characterized in that** M=4 and that said Hadamard matrix complies with the general formula

$$\mathbf{A} = \begin{bmatrix} 1 & 1 & 1 & 1 \\ 1 & 1 & -1 & -1 \\ 1 & -1 & e^{j\theta} & -e^{j\theta} \\ 1 & -1 & -e^{j\theta} & e^{j\theta} \end{bmatrix}$$

and that said first index is used for accessing a look-up table returning a quantized vector having the form:

$$[\varphi_1, \varphi_2, ...., \varphi_{M-1}, \theta]$$

where $[\varphi_1, \varphi_2, ...., \varphi_{M-1}]$ is used for generating said first diagonal unitary matrix and $\theta$ is used for generating said Hadamard matrix.

Fig. 1

BS collects channel estimation
generated by Multiple UEs — 21

Elaborate a Cost Funtion — 22

Compute $V_{cu} = \frac{1}{\sqrt{M}} DPA$ — 23

Apply iterative optimisation
algorithm and return DPA — 24

generate index of
Vector Quantization VQ — 25

generate index of P matrix — 26

Transmission to UEs of indexes of Diagonal
unitary, Permutation and Hadamard matrices — 27

Compute Vcu and transmit
precoded data — 28

# Fig. 2

```
┌──────────────────────────────────────────┐
│                    │                       │
│                    ▼                       │
│         ┌──────────────────────┐          │
│         │  Estimation of channel │          │
│         └──────────────────────┘  ╲╱ 31    │
│                    │                       │
│                    ▼                       │
│         ┌──────────────────────┐          │
│         │  Transmit Channel estimation │      │
│         │      to base station    │        ╲╱ 32
│         └──────────────────────┘          │
│                    │                       │
│                    ▼                       │
│         ┌──────────────────────┐          │
│         │ Receive indexes from base station │  │
│         │  representative of D, P, A │       ╲╱ 33
│         └──────────────────────┘          │
│                    │                       │
│                    ▼                       │
│         ┌──────────────────────┐          │
│         │   Read LUT with indexes │        │
│         │  and generation D, P and A │      ╲╱ 34
│         └──────────────────────┘          │
│                    │                       │
│                    ▼                       │
│         ┌──────────────────────┐          │
│         │      Compute Vcu       │        ╲╱ 35
│         └──────────────────────┘          │
│                    │                       │
│                    ▼                       │
│         ┌──────────────────────┐          │
│         │   Apply Vcu for decoding │        │
│         │     the received data   │        ╲╱ 36
│         └──────────────────────┘          │
│                    │                       │
│                    ▼                       │
└────────────────────────────────────────┘
```

# Fig. 3

2 × 2 MIMO independent Rayleigh fading channel, 1e4 channel realizations

Gap between optimized CUBF and current CB-UBF ~2bits/s/Hz = 50% increase

Fig. 4

## Fig. 5

4 x 4 MIMO independent Rayleigh fading channel, 1e4 channel realizations

Gap between optimized CUBF and current CB-UBF ~2bits/s/Hz = 50% increase

EP 2 209 220 A1

**INPUT**: cost function $F$

**OUTPUT**: angles $\varphi_{opt,max}$, index $p_{opt}$ of permutation

\# Loop over all possible row permutations $(M-1)!$

**for** $p = 1$ to $p = (M-1)!$ **do**

  \# Optimize angles

  solve: $\frac{\partial F}{\partial \varphi} = 0$ to find $\varphi_{opt}$

  \# Evaluate cost function $F(\varphi_{opt})$

  **if** $F > F_{max}$ **then**

    $\varphi_{opt,max} = \varphi_{opt}$

    $p_{opt} = p$

  **end if**

**end for**

# Fig. 6

**INPUT:** user channels **H**, noise power $\sigma^2$

**OUTPUT:** angles $\varphi_{\text{opt,max}}$, index $p_{\text{opt}}$ of permutation

```
# Loop over all possible row permutations (M − 1)!
for p = 1 to p = (M − 1)! do
   # Loop over a grid of initial angles
   for k = 1 to Nangles do
      # Iterate Niter times until convergence
      for j = 1 to Niter do
         # Loop over all angles in φ
         for i = 1 to Nφ do
            # Optimize angles separately
```

$$\text{solve: } \frac{\partial F(\mathbf{H}, \sigma^2)}{\partial \varphi_i} = 0 \text{ to find } \varphi_{\text{opt}}$$

use $\varphi_{i,opt}$ in the computation of $\varphi_{i+1,opt}$

```
         end for
      end for
      # Evaluate cost function F(φopt)
      if F > Fmax then
```

$\varphi_{\text{opt,max}} = \varphi_{\text{opt}}$

$p_{\text{opt}} = p$

```
      end if
   end for
end for
```

# Fig. 7

Europäisches
Patentamt

European
Patent Office

Office européen
des brevets

**EUROPEAN SEARCH REPORT**

Application Number

EP 09 36 8002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/035916 A (LG ELECTRONICS INC [KR]; LEE MOON IL [KR]; IHM BIN CHUL [KR]; LEE WOOK) 27 March 2008 (2008-03-27)<br>* page 2 - page 3 *<br>* page 16, line 18 - page 17, line 14 *<br>* figures 1,4 *<br>----- | 1-15 | INV.<br>H04B7/04 |
| A | WO 2008/086239 A (TEXAS INSTRUMENTS INC [US]; VARADARAJAN BADRI [US]; ONGGOSANUSI EKO N) 17 July 2008 (2008-07-17)<br>* paragraph [0040] - paragraph [0049]; figure 7 *<br>----- | 1,2,6, 9-11,14, 15 | |
| A | WO 2008/131593 A (HUAWEI TECH CO LTD [CN]; WENNSTROM MATTIAS [SE])<br>6 November 2008 (2008-11-06)<br>* abstract; figure 2 *<br>----- | 1,6,10, 14 | |
| A | EP 1 956 730 A (BROADCOM CORP [US])<br>13 August 2008 (2008-08-13)<br>* paragraph [0010] - paragraph [0012] *<br>* paragraph [0032] - paragraph [0035] *<br>* figure 3 *<br>----- | 3,6 | TECHNICAL FIELDS SEARCHED (IPC)<br><br>H04B |
| A | SAMSUNG: "Downlink MIMO for EUTRA"<br>3GPP DRAFT; R1-060335-PU2RC-EUTRA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Denver, USA; 20060213, 9 February 2006 (2006-02-09), XP050101282<br>* the whole document *<br>----- | 1-15 | |

The present search report has been drawn up for all claims

| Place of search | Date of completion of the search | Examiner |
|---|---|---|
| The Hague | 25 May 2009 | Boetzel, Ulrich |

EPO FORM 1503 03.82 (P04C01)

## ANNEX TO THE EUROPEAN SEARCH REPORT
## ON EUROPEAN PATENT APPLICATION NO.

EP 09 36 8002

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2009

| Patent document cited in search report | | Publication date | Patent family member(s) | | Publication date |
|---|---|---|---|---|---|
| WO 2008035916 | A | 27-03-2008 | US | 2008089442 A1 | 17-04-2008 |
| WO 2008086239 | A | 17-07-2008 | NONE | | |
| WO 2008131593 | A | 06-11-2008 | NONE | | |
| EP 1956730 | A | 13-08-2008 | KR | 20080075460 A | 18-08-2008 |
| | | | US | 2008192852 A1 | 14-08-2008 |

For more details about this annex : see Official Journal of the European Patent Office, No. 12/82